# EUROPÄISCHE PATENTSCHRIFT

(11) **EP 1 809 519 B1**
(45) Veröffentlichungstag und Bekanntmachung des Hinweises auf die Patenterteilung: **10.10.2012**
(21) Anmeldenummer: 05803451.3
(22) Anmeldetag: 08.11.2005
(51) Int. Cl.: B01D 35/30, B60R 21/34, F02M 35/04

(54) **LUFTFILTER UNTER DER MOTORHAUBE EINES KRAFTFAHRZEUGS**
AIR FILTER LOCATED UNDER THE ENGINE HOOD OF A MOTOR VEHICLE
FILTRE A AIR SITUE SOUS LE CAPOT D'UNE AUTOMOBILE

(30) Priorität: 09.11.2004 DE 102004054274
(43) Veröffentlichungstag der Anmeldung: 25.07.2007
(73) Patentinhaber: MANN + HUMMEL GMBH, 71638 Ludwigsburg (DE)
(72) Erfinder: LINHART, Jochen, 71409 Schwaikheim (DE); BAUER, Sascha, 71549 Auenwald (DE); FASOLD, Michael, 71549 Auenwald (DE); MÜLLER, Peter, 66113 Saarbrücken (DE); ARNEGGER, Klaus, 71636 Ludwigsburg (DE)
(86) Internationale Anmeldenummer: PCT/EP2005/055822
(87) Internationale Veröffentlichungsnummer: WO 2006/051072

(56) Entgegenhaltungen:
- EP-A- 1 426 237
- DE-A1- 10 063 778
- DE-A1-102004 007 283
- FR-A- 2 851 973
- GB-A- 2 411 382
- PATENT ABSTRACTS OF JAPAN Bd. 2003, Nr. 12, 5. Dezember 2003 (2003-12-05) & JP 2004 124757 A (INOAC CORP), 22. April 2004 (2004-04-22) in der Anmeldung erwähnt

## Beschreibung

### Technisches Gebiet

Die Erfindung betrifft ein Luftfiltergehäuse und sein Luftfilterelement unter der Motorhaube eines Kraftfahrzeugs.

### Stand der Technik

Aus der DE 102 57 072 ist ein Bauteil laut Oberbegriff des Anspruchs 1 zum Einbau in geringem Abstand unter der äußeren Karosseriehaut eines Kraftfahrzeuges im Fußgängeraufprallbereich bekannt. Um eine hohe Deformation der äußeren Karosseriehaut im aufprallgefährdeten Bereich von Fußgängern, wie der Motorhaube, der Frontverkleidung oder den Kotflügeln, beim Aufprall eines Fußgängers auf die Karosseriehaut eines Kraftfahrzeugs zu erzielen, ist vorgesehen, dass ein Bauteil zum Einbau in geringem Abstand unter der Karosseriehaut ein Gehäuse aufweist, das mindestens einen zur Verformung bestimmten Abschnitt mit geringer mechanischer Festigkeit besitzt.

Es ist ferner aus der DE 100 28 856 eine Motorhaube für ein Kraftfahrzeug bekannt, mit einer Außenhaut, an deren Unterseite wenigstens ein Frischluftführungskanal sowie eine dem Frischluftführungskanal zugeordnete Filteranordnung angeordnet ist. An der Unterseite der Außenhaut ist wenigstens eine sich flächig über die Unterseite erstreckende Energieaufnahmestruktur vorgesehen, in die der Frischluftführungskanal und die Filteranordnung räumlich integriert sind. Ein Nachteil bei diesem System besteht darin, dass diese Energieaufnahmestruktur unmittelbar an der Motorhaube befestigt ist und damit die Motorhaube unverhältnismäßig aufwendig und schwer wird. Außerdem werden Leitungen von der Motorhaube ausgehend zu der Brennkraftmaschine benötigt, die aufgrund der Motorhaubenbewegung flexibel ausgestaltet sein müssen.

Es ist ferner in der japanischen Veröffentlichung 2004-1 24 757 eine Motorhaube eines Kraftfahrzeugs dargestellt, die Perforationen zum Aufnehmen von Deformationen aufweist. Insbesondere sind diese Perforationen an Motorhaubenträger angeordnet.

Die FR 2 851 973 A1 zeigt eine Vorrichtung mit einer Verkleidung für einen Raum zwischen einer geschlossenen Abdeckung und einem Motorraum eines Kraftfahrzeuges auf. Es ist ein Bereich vorgesehen, um Energie bei einer Kollision gegen die Abdeckung abzubauen.

Der DE 100 63 778 A1 ist eine Sicherheitseinrichtung als Fußgängeraufprallschutz an Kraftfahrzeugen zu entnehmen mit einem als Crashbox ausgebildeten Luftfilterkasten.

### Offenbarung der Erfindung

Der Erfindung liegt die Aufgabe zugrunde, ein Bauteil unter der Motorhaube eines Kraftfahrzeugs zu schaffen, das gezielt Verformungen aufnehmen kann und zu einer Deformation in vorher definierten Bereichen beiträgt.

Diese Aufgabe wird durch die Merkmale des unabhängigen Anspruchs 1 gelöst.

Der wesentliche Vorteil der Erfindung liegt darin, dass es sich bei dem Bauteil zum Einbau unter der Motorhaube eines Kraftfahrzeugs um ein Oberteil und ein Unterteil handelt, wobei kraftübertragende Elemente vorgesehen sind, die verformbar sind oder zu einer Verformung des weiteren Teils führen, wenn eine Kraft, und zwar ausgehend von der Motorhaube des Kraftfahrzeugs, auf das Bauteil ausgeübt wird.

Es hat sich als zweckmäßig erwiesen, dass die kraftübertragenden Elemente unmittelbar auf das weitere Teil wirken oder unter Zwischenschaltung eines Funktionselementes, beispielsweise eines Luftfilters oder einer Luftfilterdichtung, die entlang des Luftfilters verläuft.

Die kraftübertragenden Elemente können z. B. eine Knickstruktur aufweisen. Es besteht auch die Möglichkeit, diese Elemente so anzuordnen, dass sie eine Rastung mit einem der Teile bilden und diese Rastung bei einer Krafteinwirkung oberhalb einer zulässigen Kraft sich löst, d. h. die Rastung geöffnet wird und dadurch ein Zusammenschieben von Oberteil und Unterteil erzielt wird. Letztendlich bedeutet das Reduzieren des Bauraums zwischen Oberteil und Unterteil ein Auffangen von Kräften, die auf die Motorhaube eines Kraftfahrzeugs wirken.

Bekanntermaßen sind gerade Luftfiltergehäuse oder auch luftführende Teile, wie z. B. Rohluftansaugleitungen, unmittelbar unter der Motorhaube eines Kraftfahrzeugs angeordnet. Eine starre Ausführung dieser Teile würde dazu führen, dass bei einer Krafteinwirkung auf die Motorhaube diese Bauteile eine Gegenkraft aufbringen, die dazu führt, dass sich die Motorhaube nicht ausreichend verformen kann. Die Ausgestaltungen der Erfindung und die Weiterbildungen sind geeignet, um ein Bauteil zu schaffen, das geeignet ist, Kräfte, die von der Motorhaube ausgehen, auffangen zu können.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können; für die Ausführungen unten dem von dem Ansprüchen definierten Umfang wird hier Schutz beanspruch.

### Kurze Beschreibung der Zeichnungen

Die Erfindung wird nachfolgend anhand von Ausführungsbeispielen näher erläutert. Es zeigen

Figur 1 die Schnittdarstellung durch ein zweiteiliges Gehäuse,

Figur 1a eine Detaildarstellung aus Figur 1,

Figur 1b eine weitere Detaildarstellung aus Figur 1,

Figur 1c eine Variante einer Bruchstelle,

Figur 1d eine Variante der Figur 1,

Figur 2 ein zweiteiliges Gehäuse mit einem Filterelement,

Figur 3 ein weiteres zweiteiliges Gehäuse mit einem darin angeordneten Filterelement,

Figur 3a verschiedene Varianten einer Abstützung eines Filterelements,

Figur 4 ein teleskopartig stauchbares Gehäuse,

Figur 5, Figur 5a ein faltbares Gehäuseunterteil,

Figur 6, a - b ein weiteres faltbares Filteroberteil,

Figur 7, Figur 7a eine stauch- und faltbare Gehäusewandung,

Figur 8 eine skelettartige Gehäusestruktur,

Figur 9, a - b ein zusammenstauchbares Gehäuse,

Figur 10, a - g Varianten zum Ausrasten von Verschlusssystemen,

Figur 11, a - g Varianten zur Schwächung von Gehäuseteilen,

Figur 12, Figur 12a weitere Varianten zum Stauchen von Gehäusen,

Figur 13, a - c ein Herstellverfahren für ein Rohluftrohr,

Figur 14, a - b ein Rohluftrohr mit Stützstäben,

Figur 15, a - c Rohre aus Material mit Sollbruchstellen,

Figur 16 weitere Rohre mit Sollbruchstellen,

Figur 17, Figur 17a Kanäle mit flexiblen Wandbereichen,

Figur 18, Figur 18a das Prinzip eines Fußgängeraufprallschutzes,

Figur 19, a - c die Verbindung von Rohren mit Sollbruchstellen,

Figur 20, Figur 20a eine weitere Verbindungsart von Rohren mit einer Sollbruchstelle.

### Ausführungsform(en) der Erfindung

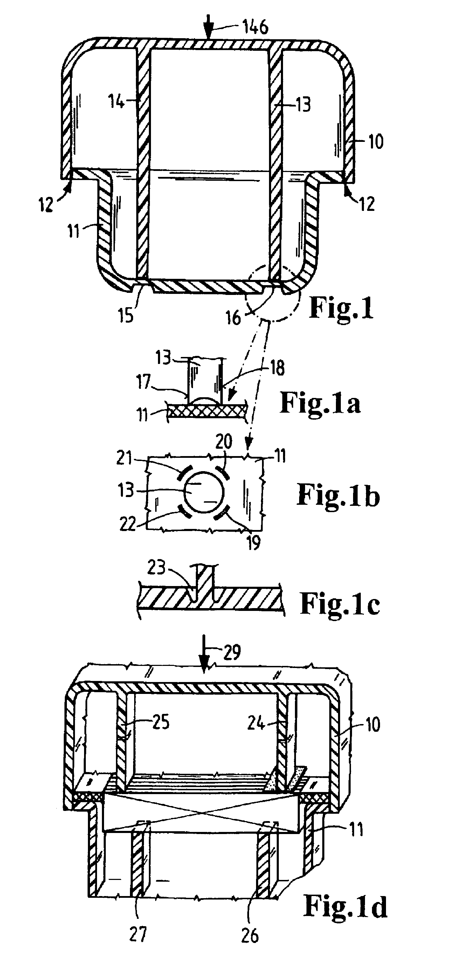

Die Figur 1 zeigt 1 ein Gehäuseoberteil 10 und ein Gehäuseunterteil 11, die z. B. als Gehäuse für die Aufnahme eines Luftfilters oder als luftführendes Gehäuse konzipiert sind. Beide Gehäuse sind miteinander über eine Kontaktstelle 12 verschlossen. Das Gehäuseoberteil 10 weist zwei Stege 13, 14 auf, die am Innenboden des Gehäuseunterteils 11 anliegen. Diese Stege besitzen beispielsweise ein Rundprofil. Der Boden des Gehäuseunterteils 11 ist im Bereich dieser Stege geschwächt, d. h. er weist einen verringerten Querschnitt im Bereich 15, 16 auf. Zweck der Stege und des verringerten Querschnittes im Bereich 15, 16 ist die Möglichkeit, dass bei einer Krafteinwirkung auf das Gehäuse in Richtung des Pfeils 146 die beiden Stege diese Bereiche durchstoßen und damit das Gehäuse zusammengeschoben wird.

Zur Verbesserung der Wirkung ist, wie in Figur 1a gezeigt, 2 dieser Bereich 16 nicht nur geschwächt, sondern der Steg 13 weist ferner eine oder mehrere Schneidkanten 17, 18 auf, welche die Abscherwirkung unterstützen. Es besteht auch die Möglichkeit, wie in Figur 1b gezeigt, den Boden des Gehäuseunterteils 11 selbst mit Schlitzen 19, 20, 21, 22 zu versehen, die ebenfalls zu einer Schwächung in dem Bereich 15, 16 führen. Figur 1c zeigt die Möglichkeit, einen Bereich, welcher definiert bei einer Belastung durchbrechen soll, mit einer umlaufenden Bruchsicke 23 zu versehen.

Figur 1d zeigt 3 nicht nur Stege 24, 25 an einem Gehäuseoberteil 10 und weitere Stege 26, 27 an einem Gehäuseunterteil 11, sondern auch ein Filterelement 28, welches zwischen den beiden Gehäusen eingespannt ist. Sowohl die oberen als auch die unteren Stege liegen am Filterelement an. Bei einer Krafteinwirkung gemäß Pfeil 29 auf das Gehäuseoberteil werden die Stege 24, 25 und die Stege 26, 27 das Filterelement 28 durchstoßen und sich beide Gehäuseteile zusammenschieben können. Bekanntermaßen ist ein Filterelement mit dem gezeigten Aufbau aufgrund seiner relativ weichen, elastischen Struktur nachgiebig und kann bei einer bestimmten Kraft abgeschert werden. Damit entfällt eine Sollbruchstelle an einem der beiden Gehäuseteile, die Elastizität des Filterelements bildet damit die Sollbruchfunktion.

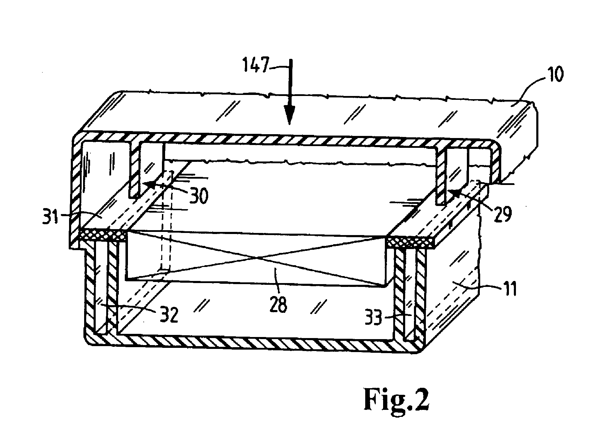

Figur 2 zeigt in einer weiteren Variante 4, ähnlich wie in Figur 1d, ein Gehäuseoberteil und ein Gehäuseunterteil, zwischen denen ein Filterelement 28 eingespannt ist. Das Filterelement weist einen umlaufenden Dichtrand aus PUR-Schaum 31 auf. Das Gehäuseoberteil ist mit Stanzstäben 29, 30 ausgestattet, die auf dem umlaufenden PUR-Rand 31 aufliegen. Das Gehäuseunterteil 11 besitzt Aufnahmekammern, die unterhalb der Stanzstäbe angeordnet sind. Sobald eine Kraft auf das Gehäuseoberteil gemäß dem Pfeil 147 einwirkt, durchstoßen die Stanzstäbe 29, 30 den PUR-Schaum und tauchen in die Aufnahmen 32, 33 ein. Selbstverständlich besteht auch die Möglichkeit, Stanzstäbe am Gehäuseunterteil anzuordnen, die dann von unten nach oben den PUR-Schaum durchstoßen.

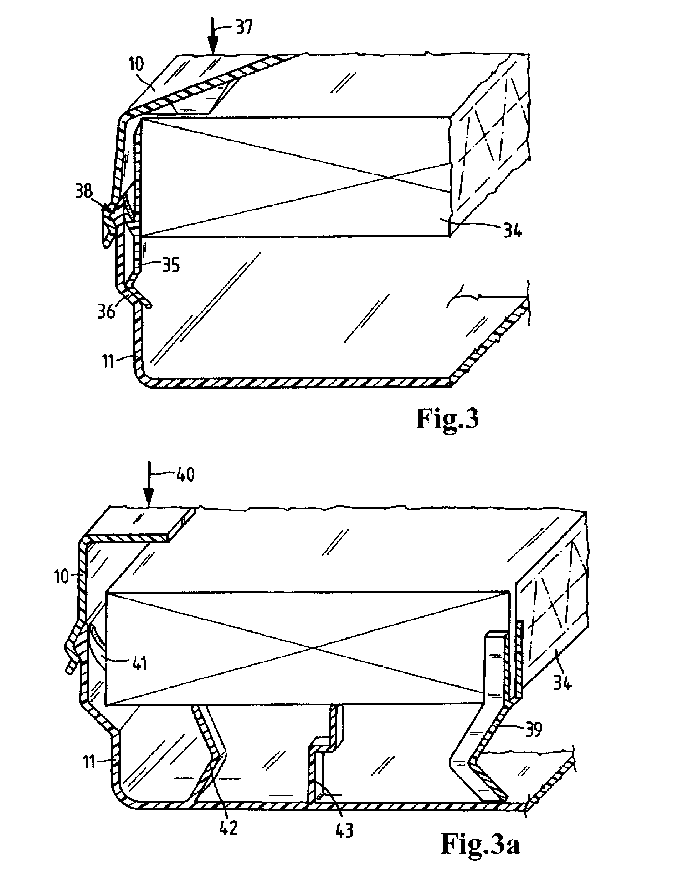

In Figur 3 ist ein 5 Filterelement 34 gezeigt, das in einer Trägerstruktur 35, die an wenigstens zwei Seitenteilen angeordnet ist, befestigt ist. Die Trägerstruktur liegt im Gehäuseunterteil 11 an einem seitlichen Rand 36 auf. Die Trägerstruktur 35 besitzt an dieser Stelle eine Form, die es ermöglicht, nach innen einzuknicken und bei einer Kraftwirkung gemäß dem Pfeil 37 auf das Gehäuseoberteil 10 eine Verschiebung des Filterelements 34 nach unten zu ermöglichen. Auch das Gehäuseoberteil 10 selbst kann aufgrund der Rastverbindung 38 zwischen Gehäuseober- und Gehäuseunterteil sich über das Unterteil schieben. Figur 3a zeigt ein Filterelement 34, 6 das mit einer Stützklammer 39 ausgestattet ist. Selbstverständlich können mehrere am Umfang verteilt angeordnete Stützklammern für das Filterelement 34 vorgesehen sein. Auch hier haben diese Stützklammern die Eigenschaften, bei einer Kraft gemäß dem Pfeil 40 auf das Gehäuseoberteil 10, die sich natürlich auch auf das Filterelement 34 auswirkt, dieses Filterelement nach unten in Richtung Gehäuseunterteil 11 zu bewegen. Zur Abdichtung ist das Filterelement beispielsweise mit einer umlaufenden Dichtlippe 41 versehen.

Unterhalb des Filterelements sind hier in einer weiteren Variante zwei Knickstege 42, 43 dargestellt. Anstelle der Stützklammer 39 können diese Knickstege das Filterelement positionieren und bei einem Stauchvorgang einknicken, sodass sich auch hier das Filterelement nach unten bewegt.

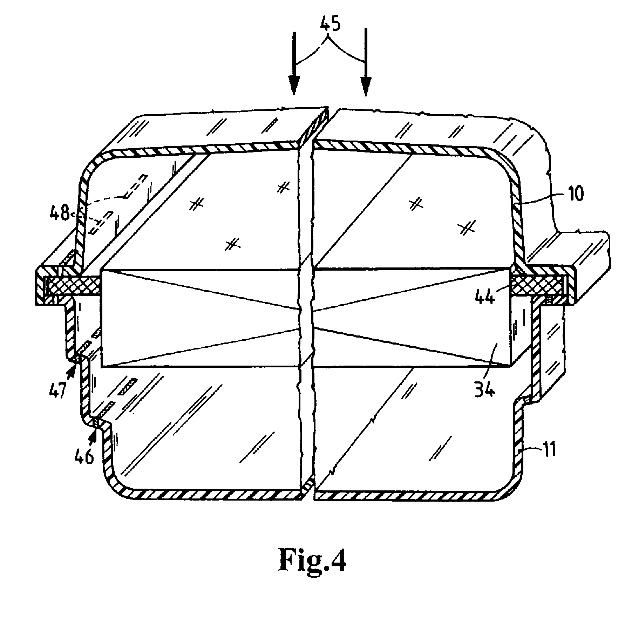

Figur 4 zeigt wiederum 7 ein Gehäuseoberteil 10 und ein Gehäuseunterteil 11 in dem ein Filterelement 34 angeordnet ist. Dieses ist mit seiner umlaufenden PUR-Dichtung 44 zwischen den beiden Gehäuseteilen eingespannt. Bei einer Kraft gemäß dem Pfeil 45 auf die beiden Gehäuseteile werden sich diese teleskopartig ineinander schieben. Dies wird ermöglicht durch Schlitze 46, die längs einer Auskragung des Gehäuseunterteils 11, oder Schlitze 47, die längs einer weiteren Auskragung des Gehäuseunterteils 11, oder auch Schlitze 48, die am Gehäuseoberteil angeordnet sind, bewirkt. Ein Brechen der Gehäuseteile längs dieser Schlitze führt zu einem teleskopartigen Zusammenschieben einer oder beider Gehäuseteile und damit zu einer Bauraumreduzierung.

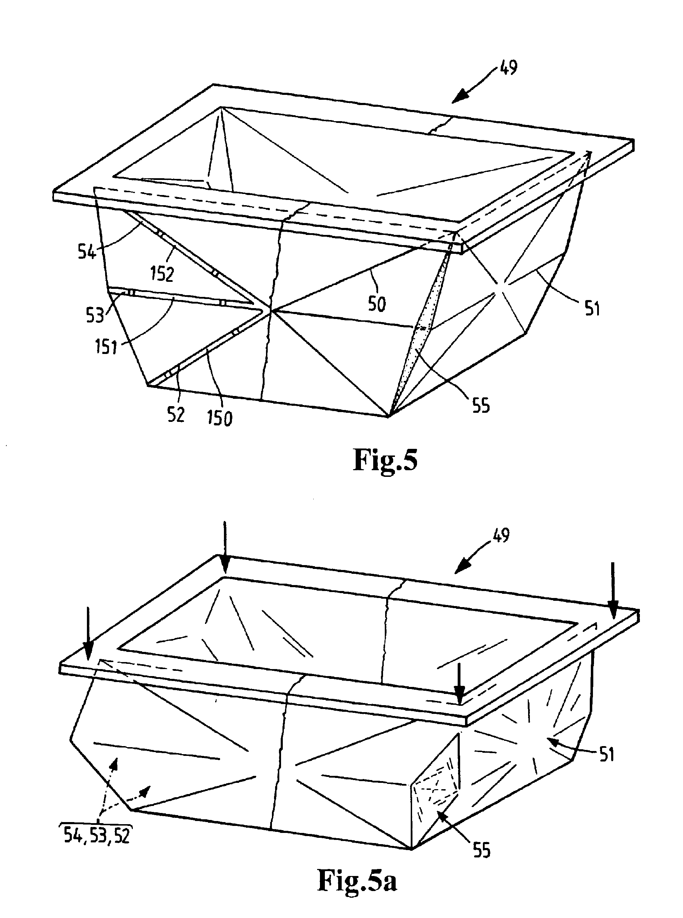

Figur 5 zeigt ein 8 Gehäuse 49, welches sowohl als Oberteil als auch als Unterteil Anwendung finden kann. Dieses ist faltbar aufgebaut, d. h. es sind entweder an den Gehäusewänden definierte Knickkanten 50, 51 angeordnet oder es befinden sich, wie linksseitig dargestellt, an dem Gehäuse Schlitze 150, 151, 152, die teilweise mit einem Elastomer 52, 53, 54 aufgefüllt sind. Dieses Elastomer ist nach Art eines Filmscharniers aufgebaut, sodass sich das Gehäuse bei einer Krafteinwirkung zusammenfalten kann, wie dies in Figur 5a dargestellt ist. Die Knickstellen können bereits vordefiniert sein, beispielsweise durch verringernde Wanddicke. Außerdem kann, wie in der Figur 5 gezeigt, eine Anrissstelle 55 definiert werden, die zu einem Aufreißen des Gehäuses bei einer Krafteinwirkung führt.

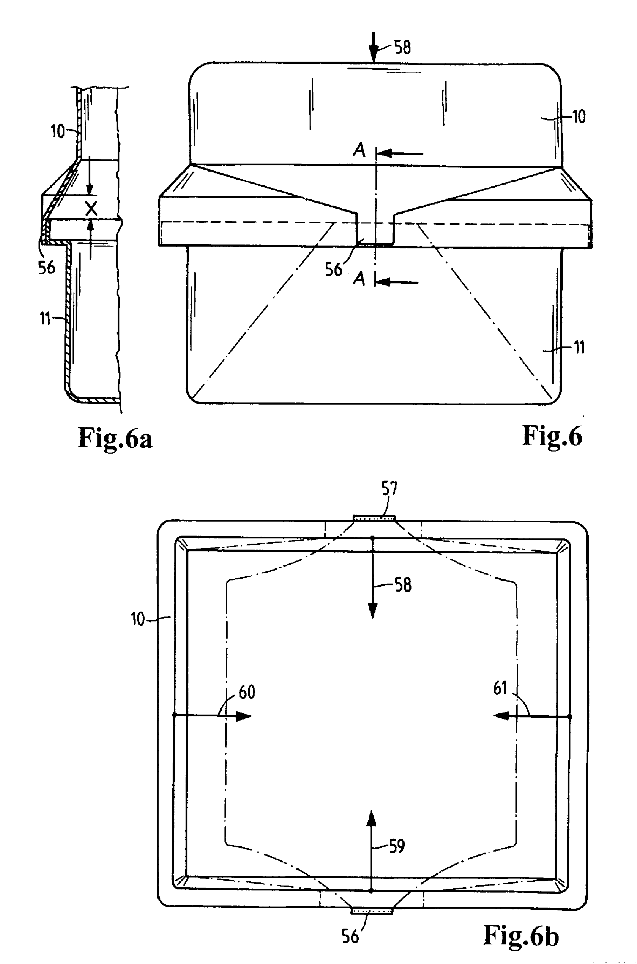

In Figur 6 ist ein weiteres 9 einknickbares Gehäuse dargestellt. Figur 6a (Schnitt A-A von Figur 6) zeigt, dass das Gehäuseoberteil 10 eine bestimmte Länge X als Vorknickbereich besitzt. Das Gehäuseoberteil ist ferner mit einem so genannten Faltrichtungsgeber 56 ausgestattet. Wie die Draufsicht gemäß Figur 6b zeigt, sind zwei solcher Faltrichtungsgeber 56, 57 am Gehäuseoberteil vorgesehen. Ein Zusammenstauchen aufgrund einer Krafteinwirkung gemäß Pfeil 58 führt dazu, dass sich zunächst das Gehäuseoberteil gemäß den beiden Pfeilen 58, 59 faltet und anschließend auch seitlich, durch die beiden Pfeile 60, 61 angedeutet, die zweite Knickrichtung realisiert wird.

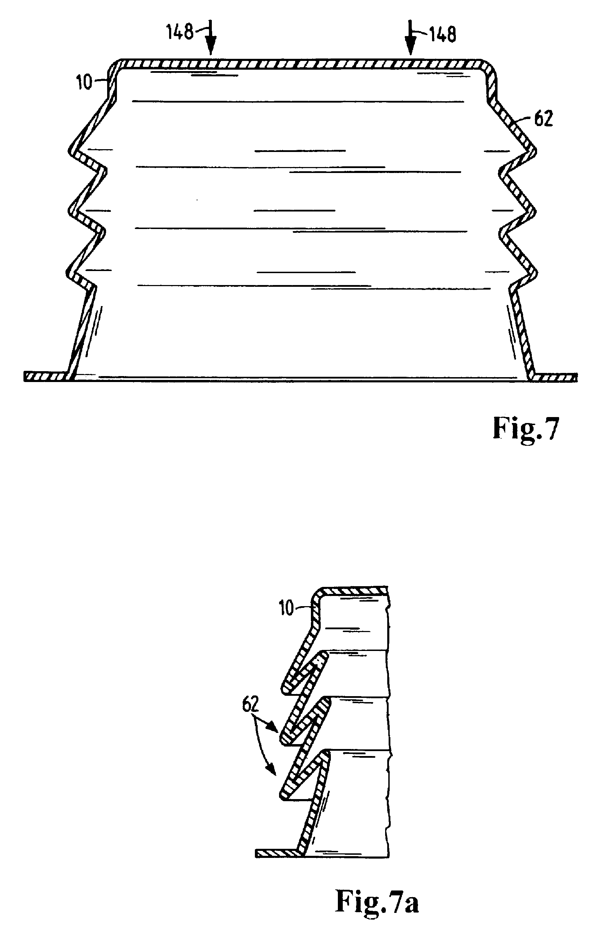

In Figur 7 und Figur 7a wird ein 10 Gehäuseoberteil 10 (kann auch Gehäuseunterteil sein) gezeigt, das ähnlich einem knickbaren Trinkhalm aufgebaut ist. Es besitzt umlaufende Falten 62, die gemäß Figur 7a sich bei einer Kraft in Richtung des Pfeils 148 zusammenfalten. Die Gestaltung solcher Faltgeometrien ist hinreichend bekannt.

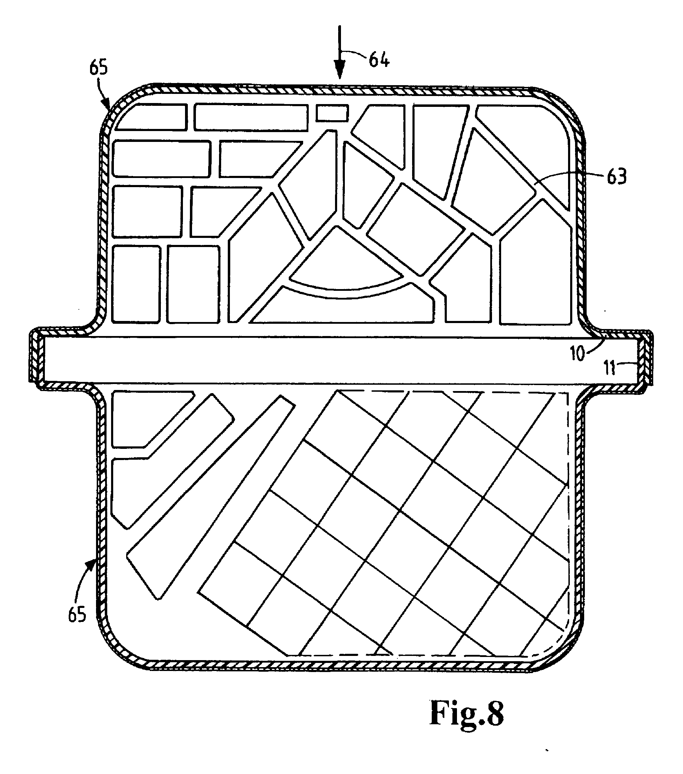

In Figur 8 ist ein 11 Filtergehäuse gezeigt, das als Skelettkorb aufgebaut ist und damit ein Gehäuse oder eine Bauteilschale bildet. Das Skelett kann verschiedene beliebige Rippenformen der Rippen 63 aufweisen und damit auch beliebige Formen der Durchbrüche. Die Gestaltung ist abhängig von der Art und der Größe der Krafteinwirkung gemäß dem Pfeil 64. Die Abdichtung des Gehäuses im Bereich der Durchbrüche oder über das gesamte System erfolgt beispielsweise mit einer umlaufenden Folie 65. Diese Folie ist an den Rippen angeklebt, hinterspritzt oder die Rippen sind umspritzt. Bei besonders niedrigem Einbauraum und wenig Platz über bzw. unter einem Filterelement, welches sich in dem Gehäuse befindet, wird das Filterelement selbst als Crashelement verwendet oder zumindest Filterelementteile zerstört.

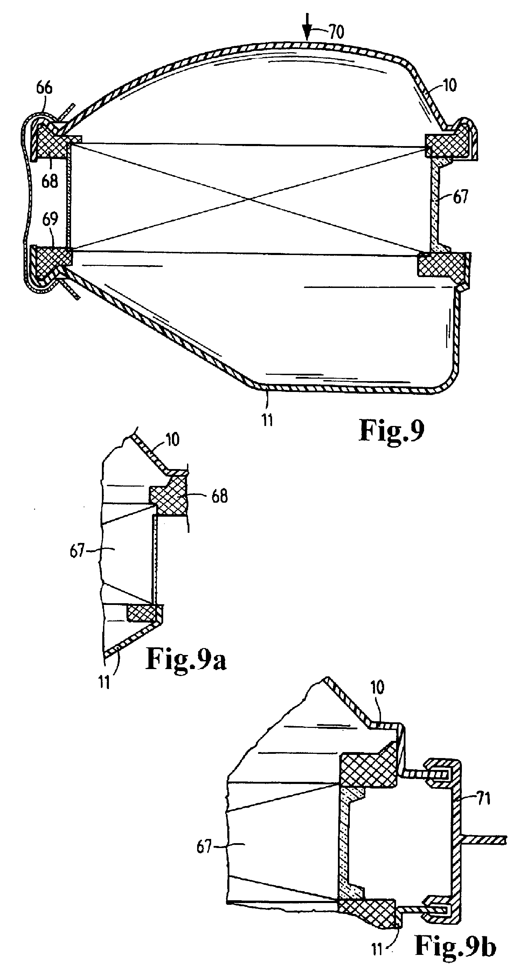

Die Figuren 9 bis 9b zeigen ein 12 Gehäuseoberteil 10 mit einem Gehäuseunterteil 11. Beide Teile sind über einen Spannbügel 66 miteinander verbunden. Das Filterelement 67 ist über die Dichtungen 68, 69 zwischen den beiden Gehäuseteilen eingespannt. Bei einem Crash oder bei einer Krafteinwirkung gemäß dem Pfeil 70 wird das Filterelement im Bereich der Dichtungen 68, 69, die umlaufend angeordnet sind, zerstört. Wie in Figur 9a gezeigt, kann der Aufbau konstruktiv derart ausgeführt werden, dass nur eine Dichtung, in diesem Fall die Dichtung 68, zerstört wird. Um eine Deformation der Dichtungen bzw. des Filterelements während eines Transports zu einem Anwender zu vermeiden, kann, wie in Figur 9b gezeigt, die Verspannung zwischen Gehäuseoberteil 10 und Gehäuseunterteil 11 mit einem Transportbügel 71 gesichert werden.

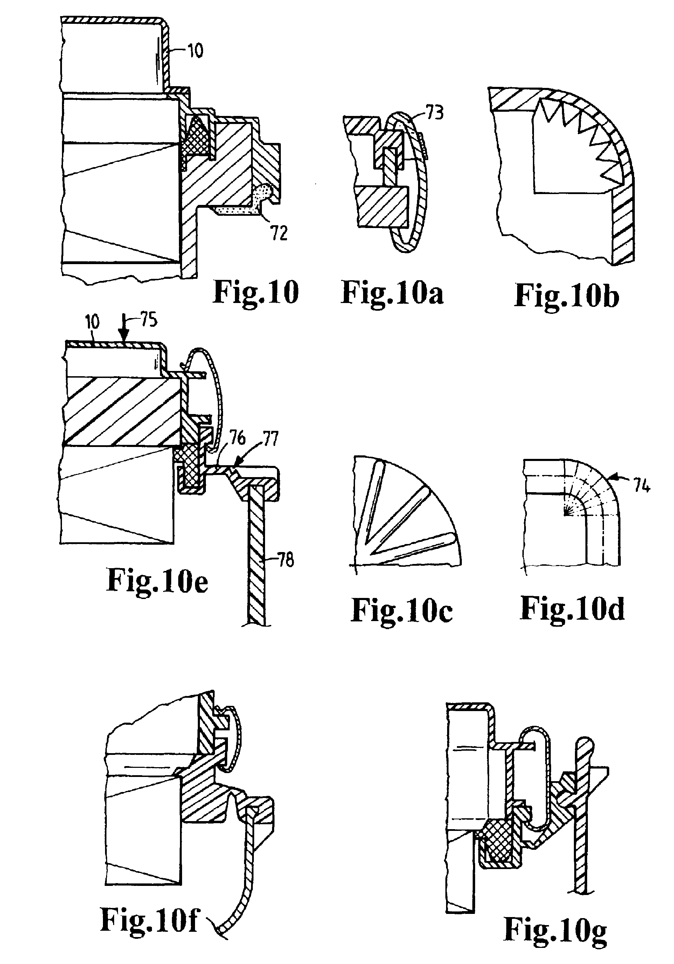

Die Figuren 10 bis 10g zeigen 13 Möglichkeit, die Verbindung zwischen einem Gehäuseteil und einem Filterelement oder zweier Gehäuseteile mit einem Aushebelsystem zu versehen. Hierzu ist, wie in Figur 10 gezeigt, ein Hebel 72 vorgesehen, der bei einer Krafteinwirkung nach unten rechts wegspringt. Anstelle eines Hebels kann auch eine Klammer 73, wie in Figur 10a gezeigt, vorgesehen sein. Auch diese ist so gestaltet, dass sie sich öffnet, wenn Kräfte auf dieselbe wirken. In den Figuren 10b, c und d sind Sicken zur Schwächung und zum definierten Falten im Eckbereich von Gehäusen dargestellt. Beispielsweise kann auch der Eckbereich aus elastischem Material 74 hergestellt sein. Dies ist schematisch angedeutet in Figur 10d gezeigt. Figur 10e zeigt ein Filterelement mit einem separaten Gelenkrahmen. Bei einer Kraft gemäß dem Pfeil 75 knickt das Gelenkteil 76 an der Knickstelle 77 ab, gleichzeitig rastet dieses Gelenkteil 76 aus der Wand 78 des Unterteils aus, sodass das Gehäuseoberteil mit dem Filterelement in das Unterteil hineingleiten kann. Auch in Figur 10f und Figur 10g ist ein solches Prinzip dargestellt. Letztendlich erfolgt das Zusammenschieben der beiden Gehäuseteile dadurch, dass eine Auskoppelung zwischen Verbindungsteilen oder Trägerteilen erfolgt.

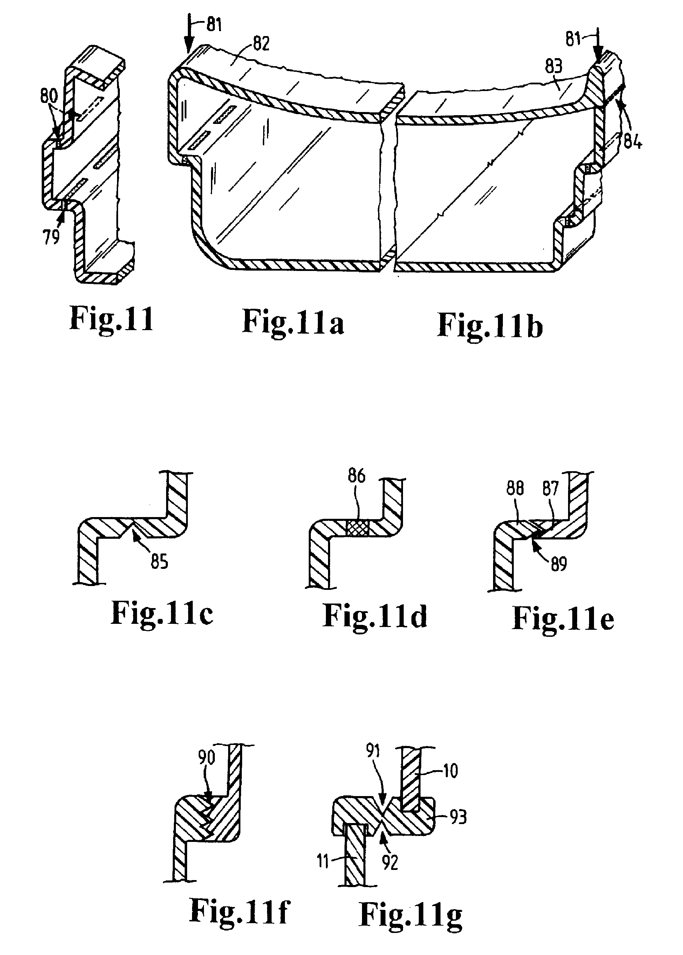

Figur 11 zeigt die Detaildarstellung einer 14 Gehäuseseitenwand mit Sollbruchbereichen, die durch geschlitzte Wände 79, 80 definiert werden. Zur besseren Krafteinleitung in diesen Bereich ist, wie in Figur 11a gezeigt, das Gehäuse an seiner Oberfläche durchgebogen, sodass eine Kraft zunächst gemäß dem Pfeil 81 auf den konvexen Teil 82 des Gehäuses auftritt und dort unmittelbar an die Sollbruchstellen weitergeleitet wird. Figur 11b zeigt in einer Variante eine bewusste Erhöhung des konkaven Bereichs 83, falls dies zur besseren Krafteinleitung erforderlich ist. Das Gehäuseoberteil kann mit dem Gehäuseunterteil im Bereich 84 miteinander verschweißt sein. Figur 11c zeigt die Möglichkeit einer Sollbruchstelle mit einer Einkerbung 85. Figur 11d zeigt eine Sollbruchstelle, bei der eine zweite Materialkomponente 86 eingefügt wird. Figur 11e zeigt eine Rastung zwischen zwei Gehäuseteilen 87, 88, wobei die Rastung in Form einer Dreiecksnut 89 ausgebildet ist. Auch Figur 11f zeigt eine Rastung mit mehreren Nuten 90, während in Figur 11g wiederum eine Sollbruchstelle mit Einkerbungen 91, 92 dargestellt ist und zeigt gleichzeitig die Verwendung eines zusätzlichen Materials 93 zwischen einem Gehäuseoberteil 10 und einem Gehäuseunterteil 11.

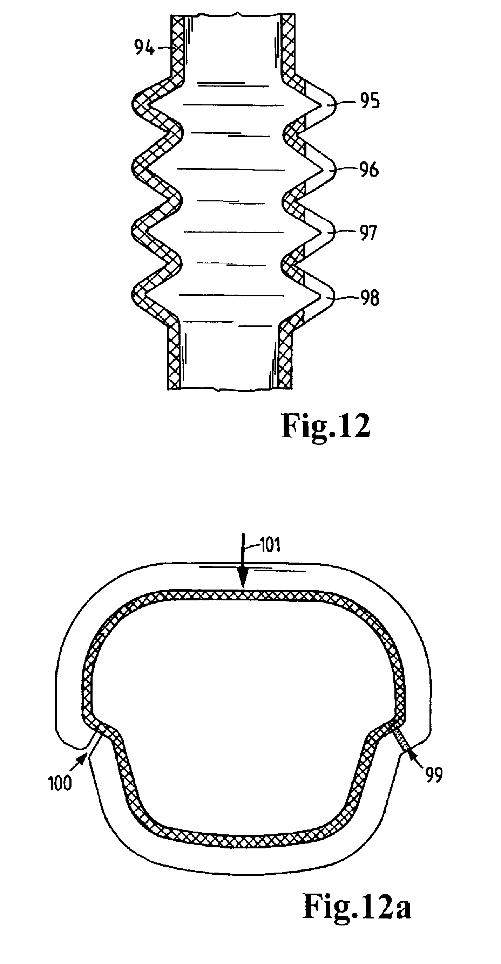

In Figur 12 ist ein 15 faltenbalg mit einem Sollbruchbereich dargestellt. Der Sollbruchbereich wird definiert durch Falten 94, die von ihrer Spitze ausgehend mit Schlitzen 95, 96, 97, 98 versehen sind. Figur 12a zeigt die Draufsicht auf einen solchen Faltenbalg, der nicht eine runde Form sondern eher eine bruchstellenoptimierte Form aufweist. Die Schlitze, die in Figur 12 dargestellt sind, befinden sich in den Bereichen 99, 100, sodass eine Kraft, die gemäß dem Pfeil 101 auf das Oberteil wirkt, dazu führt, dass in den Bereichen 99, 100 dieses faltenbalgartig aufgebaute Gehäuse zusammendrückbar ist.

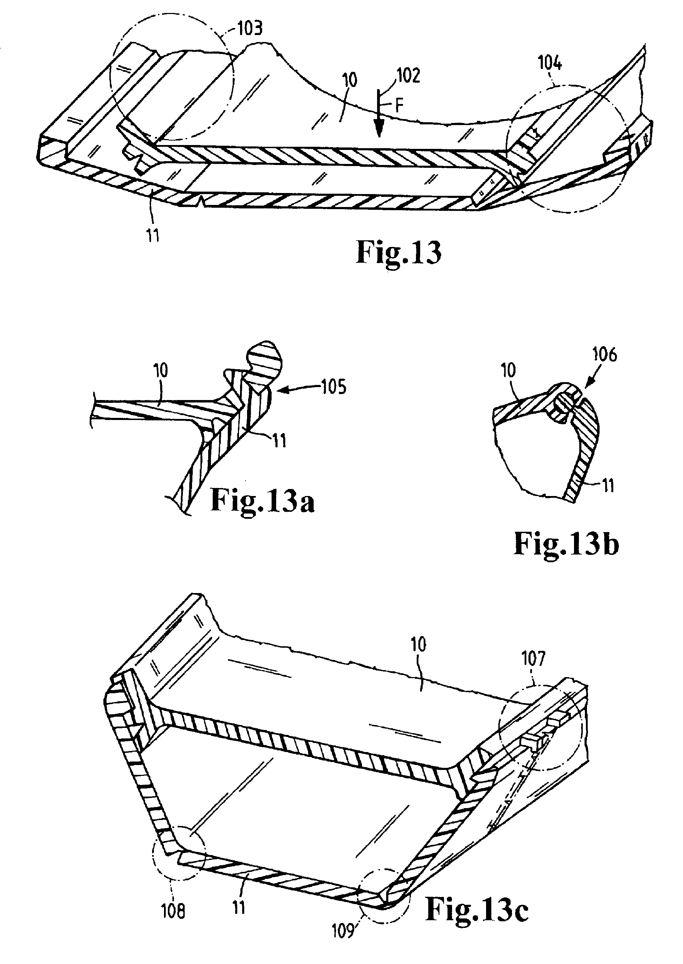

Ein weiterer Aufbau eines Gehäuses bestehend aus Oberteil 10 und Unterteil 11 zeigt Figur 13. Sofern eine Kraft gemäß dem Pfeil 102 auf das Oberteil 10 wirkt, erfolgt ein Ausrasten des Oberteils von dem Unterteil 11 und ein Zusammenfalten, wie dies in Figur 13 dargestellt ist. Die Verbindung im Verbindungsbereich 103, 104 erfolgt, wie in Figur 13a gezeigt, durch eine Verrastung über eine schlingenartige Ausgestaltung 105 des Unterteils 11 oder durch eine Art Kugelgelenk 106 zwischen Unterteil 11 und Oberteil 10 gemäß Figur 13b. Figur 13c zeigt die beiden miteinander verbundenen Gehäuseteile 10, 11, die auch über eine Rastverbindung im Bereich 107 miteinander gekoppelt sind. Entscheidend hierbei ist auch eine Anordnung zweier Filmscharniere 108, 109 zwischen Boden und Wänden des Unterteils, damit dieses sich auffalten kann. Es wird an dieser Stelle betont, dass es sich bei den Beispielen nicht nur um Gehäuse für ein Filterelement handelt, sondern dass es sich hier auch um Luftführungsteile handeln kann, die kein Luftfilterelement oder sonstige weitere Elemente beinhalten.

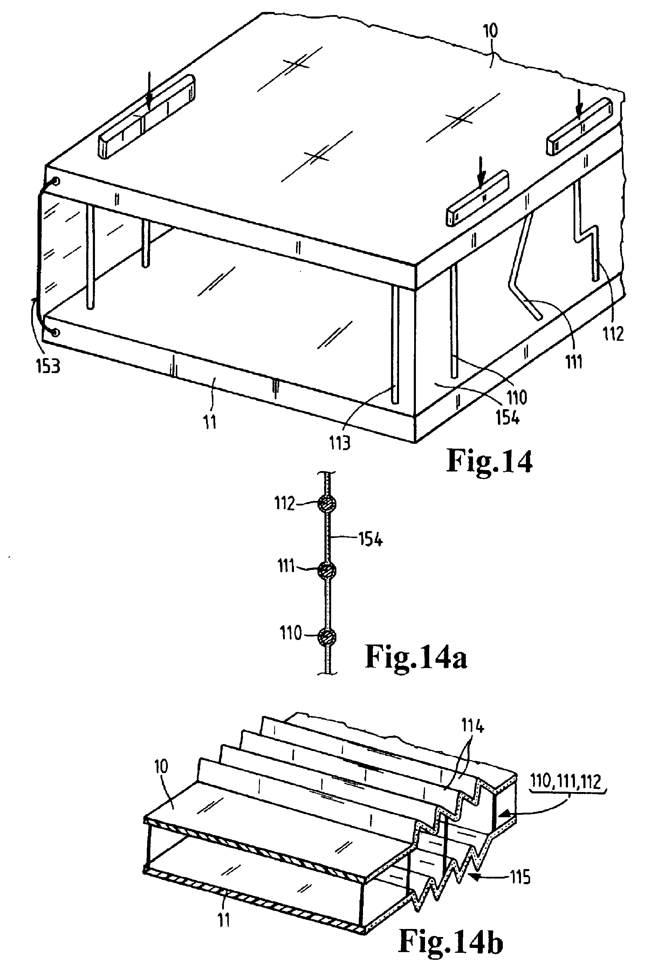

Figur 14 zeigt ein 16 Prinzip bezüglich einer Gehäusestruktur mit einem Oberteil 10 und einem Unterteil 11, wobei Stäbe 110, 111, 112, 113 mit definierten Sollbruchstellen verwendet werden können und das Gehäuse durch ein steifes Unterteil, ein steifes Oberteil und weiche, seitlich angeordnete Folienteile 153, 154 erzeugt wird. Ein Folienteil 154 ist in Figur 14a gezeigt. Es handelt sich beispielsweise um eine doppelwandige Folie, die die Stäbe 110, 111, 112 umgibt. Selbstverständlich besteht auch die Möglichkeit, wie in Figur 14b gezeigt, solche Stäbe 110, 111, 112 in einem Faltenbereich 114 eines Gehäuseoberteils 10 und einem Faltenbereich 115 eines Unterteils 11 anzuordnen.

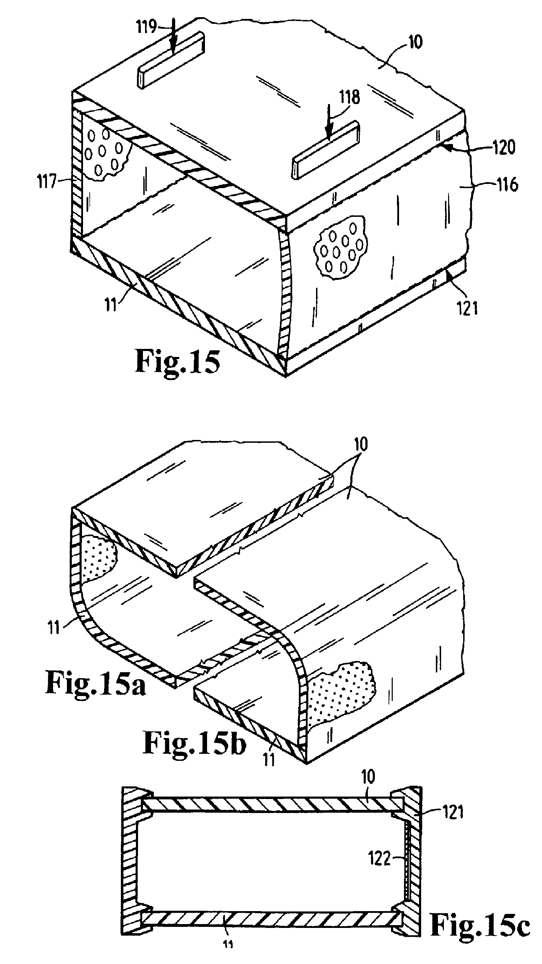

Eine weitere Variante 17 zeigt Figur 15. Hier sind Seitenwände 116, 117 zwischen einem Gehäuseoberteil 10 und einem Gehäuseunterteil 11 porös ausgeführt. Es können auch bruchdefinierte Seitenteile sein, die bei einer Krafteinwirkung über die Pfeile 118, 119 sich gezielt verformen. Die Seitenteile sind im Bereich 120, 121 mit Gehäuseober- und Gehäuseunterteil verschweißt. Wie in Figur 15a und Figur 15b gezeigt, besteht auch die Möglichkeit, Gehäuseunter- oder Gehäuseoberteil mit porösen Seitenteilen auszugestalten. Figur 15c zeigt wiederum eine poröse oder bruchdefinierte Seitenwand 121, die mit einem integrierten Knickelement 122 ausgestattet ist.

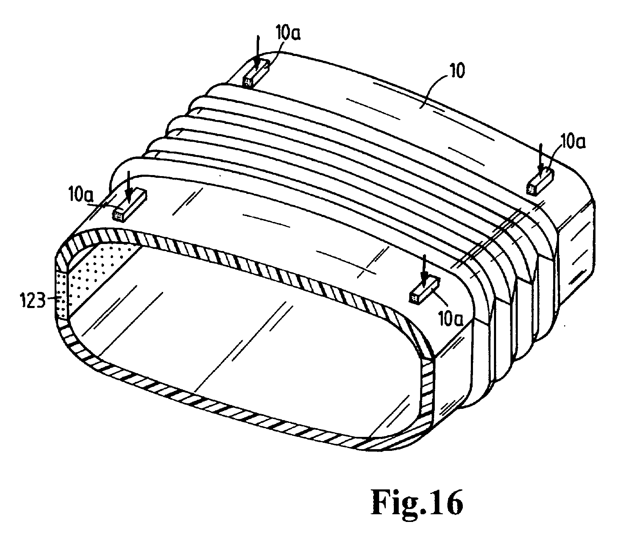

Ähnlich ist auch Figur 16 gestaltet. Auch hier ist eine 18 poröse oder knickdefinierte Seitenwand 123 vorgesehen. Eine Krafteinleitung über die am Gehäuseoberteil 10 positionierten Stege 10a führt zu einer Verformung dieser Seitenwand.

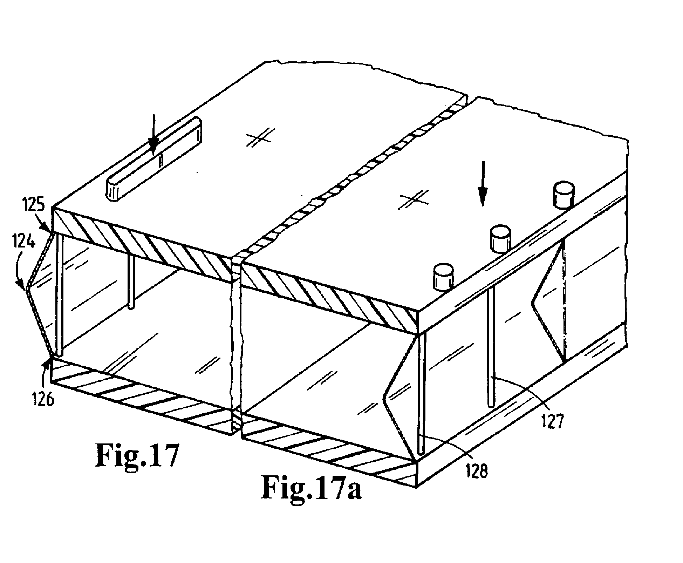

Figur 17 zeigt einen 19 Kanal, der Kunststoffseitenwände, vorzugsweise aus Polypropylen, mit mehreren Filmscharnieren 124, 125, 126 aufweist. Dabei kann sich, wie in Figur 17a gezeigt, die Seitenwand auch nach innen erstrecken und Stäbe 127, 128 mit Sollbruchstellen aufweisen. Die Stäbe 127, 128 dienen auch zur Stabilisierung, falls sich innerhalb des Kanals ein Unterdruck aufbauen sollte.

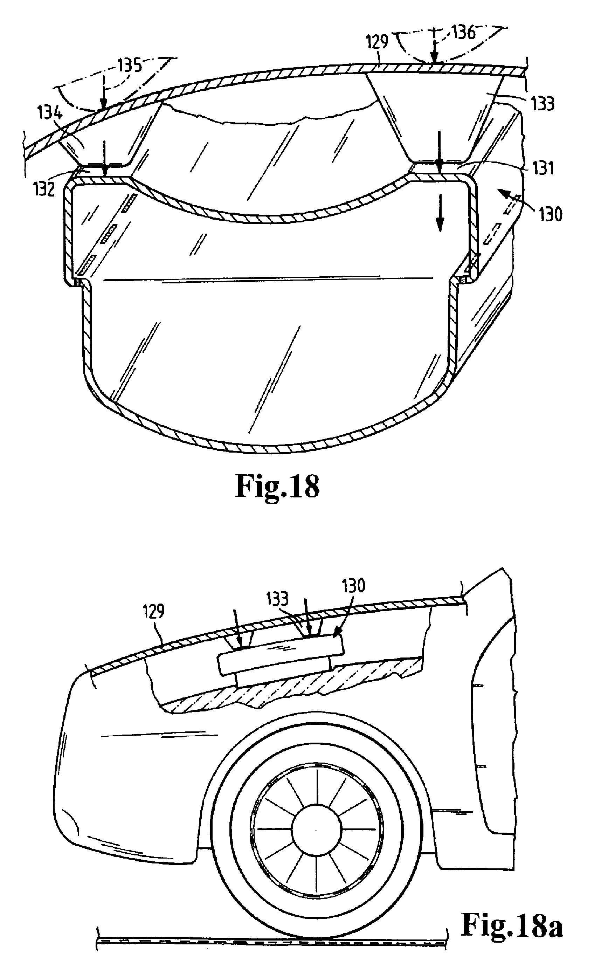

Figur 18 zeigt eine Motorhaube 129, unter welcher sich ein deformierbares Gehäuse 130 befindet. Zur Verbesserung der Krafteinleitung an der entsprechenden Position ist das Gehäuse derart gestaltet, dass die Kraft unmittelbar oberhalb der Sollbruchstelle eingeleitet wird. Hierzu ist das Gehäuse wie dargestellt mit Oberflächen 131, 132 ausgestattet, die mit Verstärkungen 133, 134 an der Motorhaube korrespondieren. Trifft im Bereich dieser Verstärkungen an der Motorhaube gemäß den Pfeilen 135, 136 eine Kraft auf, wird diese Kraft unmittelbar an das Gehäuse 130 weitergegeben. Das Gehäuse schiebt sich zusammen und wirkt als Dämpfer bzw. fängt die von oben einwirkende Kraft nachgiebig auf. Figur 18a zeigt das in Figur 18 dargestellte Prinzip in einer anderen Darstellung. Auch hier ist erkennbar, dass eine Krafteinleitung von der Motorhaube 129 ausgehend unmittelbar auf das Gehäuse 130 weitergegeben wird.

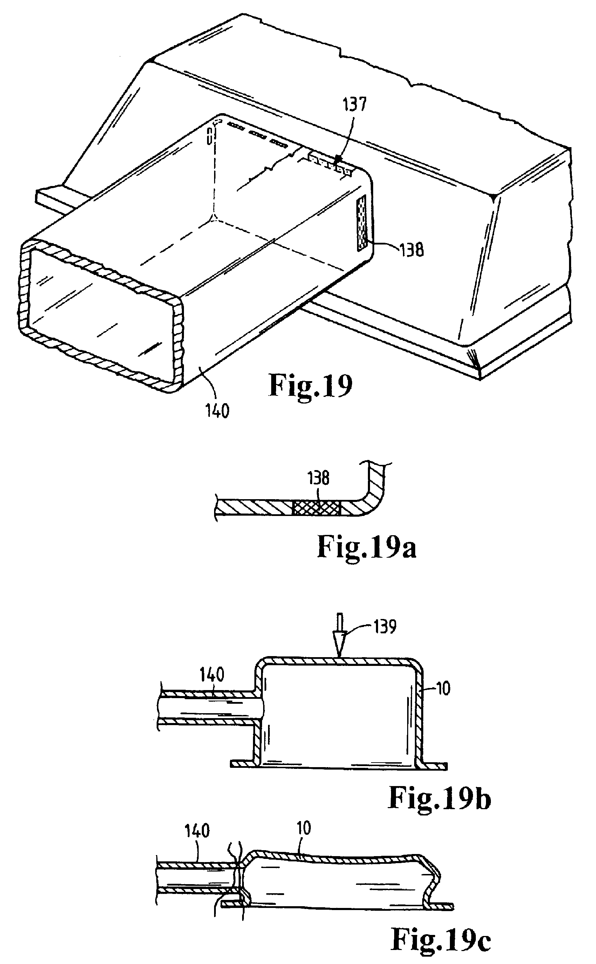

In Figur 19 ist ein 20 Anschlussbereich zwischen mehreren luftführenden Teilen oder Gehäusen gezeigt. Als Sollbruchstellen sind hier Schlitze 137 oder eine zweite Kunststoffkomponente 138 vorgesehen. Die zweite Kunststoffkomponente kann beispielsweise ein Elastomer sein oder ein bruchempfindliches Material. Dies ist in Figur 19a nochmals verdeutlicht. Die Figuren 19b und 19c zeigen, dass bei einer Krafteinleitung gemäß dem Pfeil 139 sich das Gehäuseoberteil 10 nach unten verformt und sich das Rohr 140 von dem Gehäuse 10 aufgrund der Sollbruchstelle trennt.

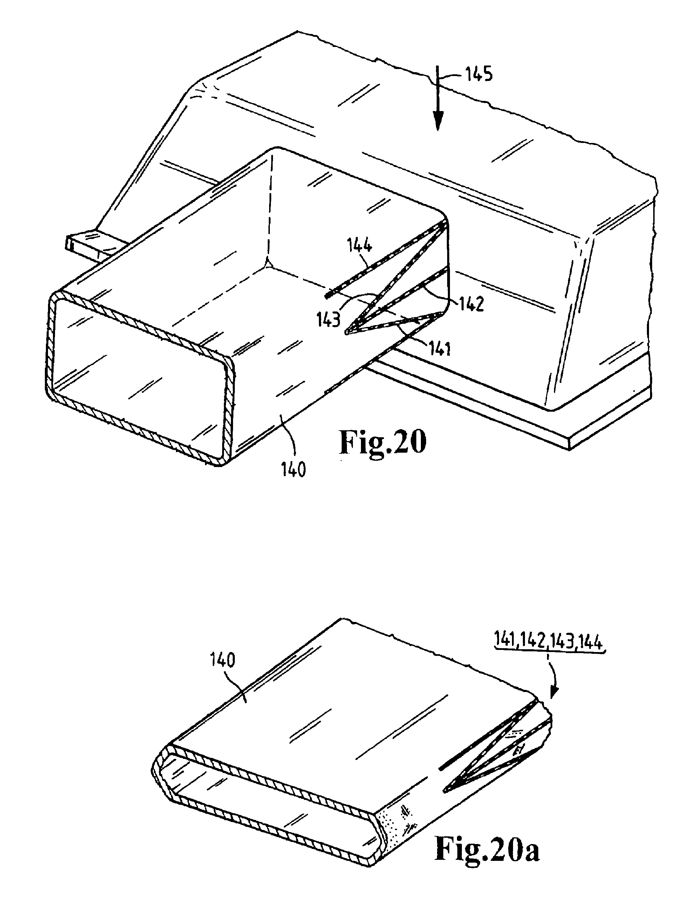

21 besteht auch die Möglichkeit, wie in Figur 20 und Figur 20a gezeigt, an dem Rohr 140 seitlich vordefinierte Knick- und Bruchstellen 141, 142, 143, 144 anzuordnen. Auch hier bewirkt dieser Aufbau bei einer Krafteinleitung gemäß dem Pfeil 145 ein Zusammenschieben des Rohres 140.

### Liste der Einfügungen (Austauschseiten 4 bis11)

1: aus dem Stand der Technik
2: im Stand der Technik
3: aus dem Stand der Technik
4: aus dem Stand der Technik
5: erfindungsgemäßes
6: aus dem Stand der Technik
7: aus dem Stand der Technik
8: bekanntes
9: nicht erfindungsgemäßes
10: aus dem Stand der Technik bekanntes
11: nicht erfindungsgemäßes
12: nicht erfindungsgemäßes
13: eine nicht erfindungsgemäße
14: bekannten
15: aus dem Stand der Technik bekannter
16: bekanntes
17: aus dem Stand der Technik
18: nicht erfindungsgemäße
19: nicht erfindungsgemäßen
20: nicht erfindungsgemäßer
21: Wie aus dem Stand der Technik bekannt,

## Patentansprüche

1. Luftfiltergehäuse zum Einbau unter der Motorhaube (129) eines Kraftfahrzeugs, wobei dieses aus einem Oberteil (10) und einem Unterteil (11) besteht und wobei eines der Teile kraftübertragende Elemente aufweist, die derart angeordnet sind, dass sie auf dem weiteren Teil unmittelbar anliegen oder angrenzen, und diese kraftübertragenden Elemente oder das weitere Teil derart verformbar sind, dass sich der Raum zwischen Oberteil (10) und Unterteil (11) bei einer Krafteinwirkung auf das Oberteil (10) reduziert, umfassend ein Luftfilterelement (34), **dadurch gekennzeichnet, dass** das Filterelement (34) in einer Trägerstruktur (35) befestigt ist, die an wenigstens zwei Seitenteilen angeordnet ist, wobei die Trägerstruktur (35) im Unterteil (11) an einem seitlichen Rand (36) aufliegt und unter Krafteinwirkung, zur Ermöglichung einer Verschiebung des Filterelements (34) nach unten, nach innen einknickbar ist, wobei zwischen Oberteil (10) und Unterteil (11) eine Rastverbindung (38) angeordnet ist, die durch die kraftübertragenden Elemente gebildet wird.

2. Kraftfahrzeug mit einer Motorhaube (129) und einem Luftfiltergehäuse nach Anspruch 1, **dadurch gekennzeichnet, dass** das Oberteil (10) und das Unterteil (11) eine unter Krafteinwirkung auf das Oberteil (10), ausgehend von der Motorhaube (129) des Kraftfahrzeugs, lösbare Rast- oder Schnappverbindung (38) aufweisen.

## Claims

1. Air filter housing for installation under the engine hood (129) of a motor vehicle, consisting of an upper part (10) and a lower part (11) and one of the parts featuring force-transmitting elements which are disposed in such a way that they abut on or adjoin to the other part directly and that these force-transmitting elements or the other part are deformable in such a way that the space between upper part (10) and lower part (11) is reduced when a force is applied to the upper part (10), comprising an air-filter element (34), **characterized in that** the filter element (34) is attached in a carrier structure (35) which is disposed at at least two side parts, the carrier structure (35) abutting in the lower part (11) on a lateral edge (36) and being bendable towards the inside when force is applied for allowing a displacement of the filter element (34) towards the bottom, a snap-in connection (38) which is formed by the force-transmitting elements being disposed between upper part (10) and lower part (11).

2. Motor vehicle with an engine hood (129) and an air filter housing according to claim 1, **characterized in that** the upper part (10) and the lower part (11) feature a detachable snap-in or snap-fit connection (38) due to the application of a force to the upper part (10), starting at the engine hood (129) of the motor vehicle.

## Revendications

1. Boîtier de filtre à air pour le montage en dessous du capot (129) d'un véhicule automobile, constitué d'une partie supérieure (10) et d'une partie inférieure (11) et une des ces parties présentant des éléments de transmission de force disposés de telle manière qu'ils soient en contact direct sur l'autre partie ou soient adjacents à l'autre partie, ces éléments de transmission de force ou l'autre partie pouvant être déformés de manière à ce que, lorsqu'une force est exercée sur la partie supérieure (10), l'espace entre la partie supérieure (10) et la partie inférieure (11) diminue, comprenant un élément de filtre à air (34), **caractérisé en ce que** l'élément filtrant (34) est fixé dans une structure porteuse (35) qui est disposée sur au moins deux pièces latérales, la structure porteuse (35) reposant dans la partie inférieure (11) sur un bord latéral (36) et pouvant être rabattue vers l'intérieur, lorsqu'une force est exercée, afin de pouvoir déplacer l'élément filtrant (34) vers le bas, un raccord à crans (38) formé par les éléments de transmission de force étant placé entre la partie supérieure (10) et la partie inférieure (11).

2. Véhicule automobile avec un capot (129) et un boîtier de filtre à air selon la revendication 1, **caractérisé en ce que** la partie supérieure (10) et la partie inférieure (11) présentent un raccord à crans ou à enclenchement (38) amovible lorsqu'une force est exercée sur la partie supérieure (10), à partir du capot (129) du véhicule automobile.
